# EUROPEAN PATENT SPECIFICATION

(11) **EP 4 570 532 B1**
(45) Date of publication and mention of the grant of the patent: **05.08.2026**
(21) Application number: 24209871.3
(22) Date of filing: 30.10.2024
(51) Int. Cl.: B60C 13/00, B60C 11/01

(54) **PNEUMATIC TIRE**
LUFTREIFEN
PNEUMATIQUE

(30) Priority: 15.12.2023 JP 2023212335
(43) Date of publication of application: 18.06.2025
(73) Proprietor: Sumitomo Rubber Industries, Ltd., Kobe-shi, Hyogo 651-0072 (JP)
(72) Inventor: ITO, Shunsuke, Kobe-shi, 651-0072 (JP)
(74) Representative: Manitz Finsterwald Patent- und Rechtsanwaltspartnerschaft mbB

(56) References cited:
- JP-A- 2011 084 144
- JP-A- 2014 118 062
- US-A1- 2020 189 319

## Description

### BACKGROUND OF THE INVENTION

### Field of the Invention

The present invention relates to a pneumatic tire that is mounted and used on a rim.

### Background Art

Small-diameter pneumatic tires suitable for use on small shuttle buses and the like have conventionally been known. For example, Japanese Laid-Open Patent Publication No. 2023-102627 proposes a pneumatic tire in which a bead portion on which strain is concentrated due to the diameter being reduced has improved durability.

However, a vehicle such as a small shuttle bus is frequently stopped in the vicinity of a curbstone, and, for a small-diameter tire such as the pneumatic tire described in Japanese Laid-Open Patent Publication No. 2023-102627, there has been a demand for improvement in cut resistance against puncturing or damage to a wheel, which is caused by contact with a curbstone.

A pneumatic tire in accordance with the preamble of claim 1 is known from JP 2014 118062 A. Related tires are described in JP 2011 084144 A and US 2020/189319 A1.

The present invention has been made in view of the aforementioned circumstances. It is a main object of the present invention to provide a pneumatic tire that can have improved cut resistance.

### SUMMARY OF THE INVENTION

The object is solved by a pneumatic tire having the features of claim 1. Sub-claims are directed at specific embodiments of the invention.

The present invention is directed to a pneumatic tire to be mounted and used on a rim having a rim diameter RD of 10 to 18 inches and a rim width RW. The pneumatic tire includes a tread portion having a ground contact surface, wherein the tread portion includes tread rubber forming the ground contact surface, and a pair of sidewall portions extending inward in a tire radial direction from both sides of the tread portion in a tire axial direction. The tire has a cross-sectional width SW obeying the relation that a ratio RW/SW of the rim width RW to the cross-sectional width SW is 78% to 99%. A ratio SH/SW of a cross-sectional height SH of the tire to the cross-sectional width SW is 30% to 45%. Each of the pair of sidewall portions has a buttress portion located on an outer side in the tire radial direction. A protector protruding outward in the tire axial direction is disposed on at least one of a pair of the buttress portions. A ratio DH/SH of a height DH of the protector in the tire radial direction to the cross-sectional height SH is 30% to 50%. A product (DH/SH)×PH×Hs of the ratio DH/SH, a protrusion height PH [mm] of the protector, and a hardness Hs of the tread rubber (2G) is 34 to 201, wherein the hardness Hs of the tread rubber 2G is a durometer hardness as measured by using a type A durometer in accordance with JIS-K6253 in an environment of 23°C.

The pneumatic tire according to the present invention has the above-described configuration and therefore, can have improved cut resistance.

According to an embodiment of the invention, the protector has an outer end located outward, in the tire axial direction, of a tire maximum width position on each of the sidewall portions excluding the protector.

According to an embodiment of the invention, the protector is provided on each of the pair of the buttress portions.

According to an embodiment of the invention, a total width PW of the tire between a pair of the outer ends is 105% to 115% of the cross-sectional width SW.

According to an embodiment of the invention, the protector has the protrusion height PH of 2.0 to 6.0 mm.

According to an embodiment of the invention, the pneumatic tire includes a carcass extending from the tread portion to a bead portion located inward of each of the pair of sidewall portions in the tire radial direction, and the carcass includes at least two carcass plies.

According to an embodiment of the invention, the at least two carcass plies include, in the tread portion, a first carcass ply located on an inner side in the tire radial direction, and a second carcass ply located outward of the first carcass ply in the tire radial direction, and each of the first carcass ply and the second carcass ply includes a body portion extending from the tread portion to bead cores of a pair of the bead portions through the pair of sidewall portions, and a pair of turned-up portions continuous to the body portion, the turned-up portions being turned up around a pair of the bead cores, respectively, from an inner side to an outer side in the tire axial direction.

According to an embodiment of the invention, an outer end, in the tire radial direction, of each of the pair of turned-up portions of the first carcass ply is located outward of an outer end, in the tire radial direction, of the corresponding one of the pair of turned-up portions of the second carcass ply, in the tire radial direction.

### BRIEF DESCRIPTION OF THE DRAWINGS

FIG. 1 is a cross-sectional view of a pneumatic tire according to an embodiment of the present invention; and
FIG. 2 is an enlarged cross-sectional view of a sidewall portion.

### DETAILED DESCRIPTION

One embodiment of the present invention will be described below in detail with reference to the drawings.

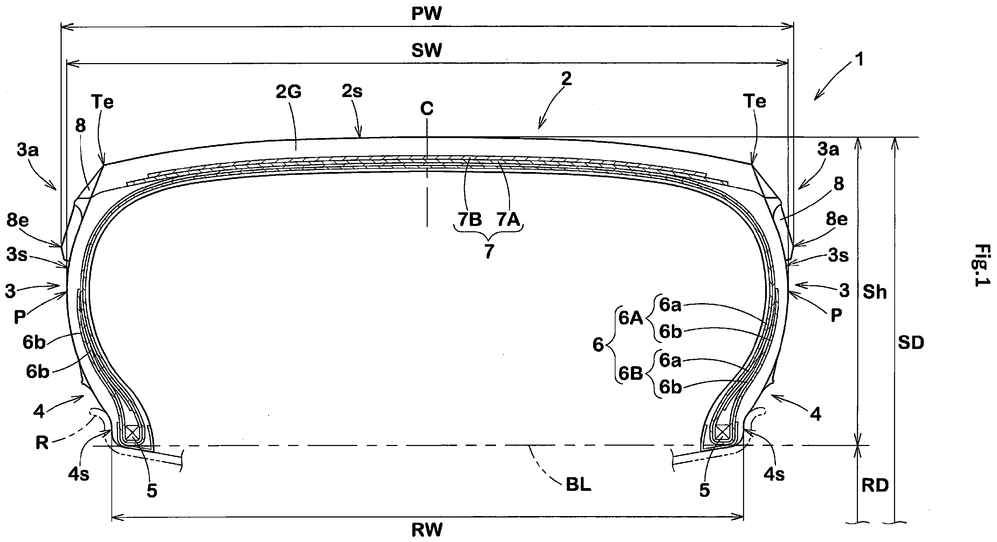

FIG. 1 is a tire meridional cross-sectional view of a pneumatic tire 1 of the present embodiment in a standardized state. The "standardized state" refers to a state in which the pneumatic tire 1 is mounted on a standardized rim and adjusted to be inflated to a standardized internal pressure, and no load is applied to the pneumatic tire 1. Hereinafter, unless otherwise specified, dimensions of components of the pneumatic tire 1, etc., are represented by values measured in the standardized state.

In a case where a standard system including a standard on which the pneumatic tire 1 is based is provided, the "standardized rim" refers to a rim R that is defined by the standard for each tire, and is, for example, "standard rim" in the JATMA standard, "Design Rim" in the TRA standard, or "Measuring Rim" in the ETRTO standard. In a case where a standard system including a standard on which the pneumatic tire 1 is based is not provided, the "standardized rim" refers to a rim R having the smallest rim width RW among rims R on which the tire can be mounted, and which do not cause air leakage and have the smallest rim diameter RD.

In a case where a standard system including a standard on which the pneumatic tire 1 is based is provided, the "standardized internal pressure" refers to an air pressure that is defined by the standard for each tire, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard. In a case where a standard system including a standard on which the pneumatic tire 1 is based is not provided, the "standardized internal pressure" refers to an air pressure defined for each tire by a manufacturer or the like.

As illustrated in FIG. 1, the pneumatic tire 1 according to the present embodiment is mounted and used on the rim R, has a small diameter, a small ground contact length, and a large ground contact width, and thus has a so-called wide ground contact surface shape. The pneumatic tire 1 having such a structure can allow increase in space in a vehicle and space inside the rim, and thus allows, for example, improvement in transport efficiency, use of a large-diameter brake, and upsizing of an in-wheel motor, when used in a small bus, a low-floor electric vehicle, or the like.

The rim R on which the pneumatic tire 1 according to the present embodiment is mounted has a rim diameter RD of 10 to 18 inches. Since the rim diameter RD is 10 inches or more, a space can be ensured inside the rim. Since the rim diameter RD is 18 inches or less, excessive increase in rim weight and tire weight can be inhibited, resulting in improvement in ride comfort.

In the present embodiment, a rim width RW of the rim R is 78% to 99% of a cross-sectional width SW of the tire. Here, the rim width RW of the rim R corresponds to a width between a pair of outer surfaces 4s in the tire axial direction, which are located on an inner side, in the tire radial direction, of the pneumatic tire 1 in the standardized state. The cross-sectional width SW is a width in the tire axial direction between a pair of tire maximum width positions P in a profile excluding partially protruding portions of the pneumatic tire 1.

Since the rim width RW is 78% or more of the cross-sectional width SW, a large volume of a tire inner cavity can be ensured, contributing to improvement in ride comfort.

Since the rim width RW is 99% or less of the cross-sectional width SW, a contribution to bearing a heavy load of a small bus, a low-floor electric vehicle, or the like, can be made.

In the pneumatic tire 1 according to the present embodiment, a ratio SH/SW of a cross-sectional height SH of the tire to the cross-sectional width SW is 30% to 45%. Here, the cross-sectional height SH of the tire is a height in the tire radial direction from a bead base line BL to a tire equator C. The bead base line BL is an imaginary line corresponding to the rim diameter RD of the rim R. The ratio SH/SW is a value commonly known as an aspect ratio.

Since the ratio SH/SW is 30% or more, a large volume of the tire inner cavity can be ensured, resulting in improvement in ride comfort. Since the ratio SH/SW is 45% or less, excessive increase in an outer diameter SD of the tire is inhibited, contributing to increase in space in a vehicle such as a small bus or a low-floor electric vehicle.

The pneumatic tire 1 according to the present embodiment includes a tread portion 2 having a ground contact surface 2s, and a pair of sidewall portions 3 extending inward in the tire radial direction from both sides of the tread portion 2 in the tire axial direction. In the present embodiment, the pair of sidewall portions 3 each have a buttress portion 3a located on an outer side in the tire radial direction.

The pneumatic tire 1 preferably includes bead portions 4 located inward of the pair of sidewall portions 3, respectively, in the tire radial direction. Here, the outer surface 4s, in the tire axial direction, which is located on the inner side of the pneumatic tire 1 in the tire radial direction is an outer surface 4s of the bead portion 4 in the tire axial direction.

Each of the pair of bead portions 4 has a ring-shaped bead core 5 extending in the tire circumferential direction, for example. The bead core 5 is, for example, formed of a steel wire. The pneumatic tire 1 preferably includes a carcass 6 extending from the tread portion 2 to the pair of bead portions 4, and a belt layer 7 provided in the tread portion 2.

In the present embodiment, a protector 8 protruding outward in the tire axial direction is disposed in at least one of the pair of buttress portions 3a. The protector 8 partially protrudes outward in the tire axial direction from an outer surface 3s that forms a profile of the sidewall portion 3 having the buttress portion 3a, for example. The protector 8 is preferably provided at least on the outer surface 3s which is disposed on the outer side of a vehicle when the tire is mounted on the vehicle.

In the buttress portion 3a having such a structure, when the pneumatic tire 1 approaches a curbstone, the protector 8 is brought into contact with the curbstone, thereby inhibiting the outer surface 3s of the sidewall portion 3 and the rim R from coming into contact with the curbstone. In addition, since the protector 8 is provided on the buttress portion 3a, even when a curbstone is low, contact between the outer surface 3s and the curbstone can be reliably reduced. Therefore, the pneumatic tire 1 according to the present embodiment can have improved cut resistance.

More preferably, the protector 8 is provided on each of the pair of buttress portions 3a. For the pneumatic tire 1 having such a structure, puncturing and damage to a wheel due to contact with a curbstone can be reduced irrespective of the mounting direction to the rim R. In a case where a tread pattern formed in the ground contact surface 2s is an asymmetric pattern for which a tire mounting direction to a vehicle is designated, the protector 8 is preferably provided merely on the buttress portion 3a to be located on the outer side of the vehicle.

In the present embodiment, the protector 8 has an outer end 8e that is located outward, in the tire axial direction, of the tire maximum width position P on the outer surface 3s of the sidewall portion 3 excluding the protector 8. The protector 8 having such a structure can reliably reduce contact between a curbstone and the sidewall portion 3.

A total width PW of the tire is a width in the tire axial direction between a pair of the outer ends 8e, and the total width PW is preferably 105% to 115% of the cross-sectional width SW. Since the total width PW is 105% or more of the cross-sectional width SW, contact between a curbstone and the sidewall portion 3 can be reliably reduced, resulting in improvement in cut resistance of the pneumatic tire 1. Since the total width PW is 115% or less of the cross-sectional width SW, excessive increase in side stiffness can be inhibited, so that the pneumatic tire 1 can achieve both cut resistance and ride comfort.

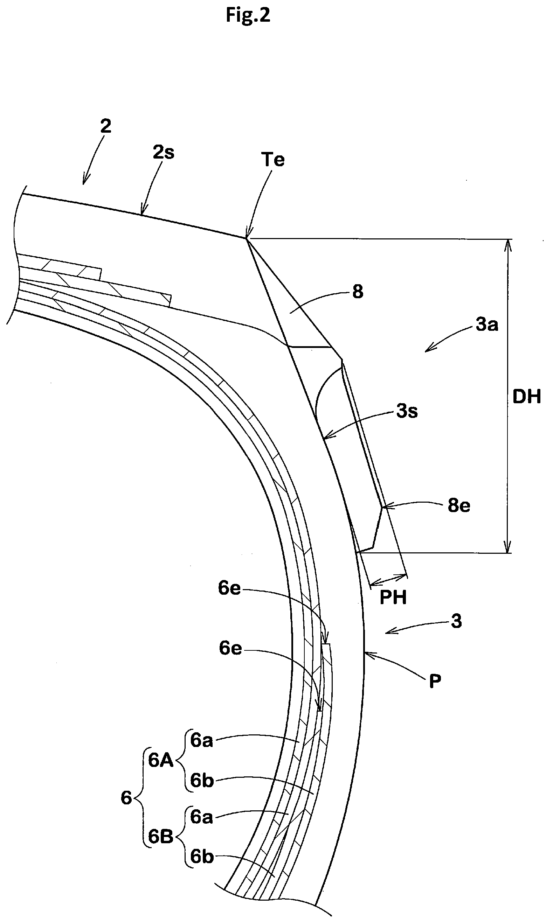

FIG. 2 is an enlarged cross-sectional view of the sidewall portion 3. As illustrated in FIGS. 1 and 2, a protrusion height PH of the protector 8 is preferably 2.0 to 6.0 mm. Since the protrusion height PH is 2.0 mm or more, contact between a curbstone and the sidewall portion 3 can be reliably reduced, resulting in improvement in cut resistance of the pneumatic tire 1. Since the protrusion height PH is 6.0 mm or less, excessive increase in side stiffness can be inhibited, so that the pneumatic tire 1 can achieve both cut resistance and ride comfort.

In the present embodiment, the tread portion 2 includes tread rubber 2G that forms the ground contact surface 2s. The ground contact surface 2s preferably has a pair of tread ends Te on both sides in the tire axial direction. Here, the pair of tread ends Te are each an outermost ground contact position, in the tire axial direction, of the pneumatic tire 1 which is in contact with a plane at a camber angle of 0° with 70% of the standardized load being applied to the pneumatic tire 1 in the standardized state. The center position in the tire axial direction between the pair of tread ends Te is the tire equator C.

In a case where a standard system including a standard on which the pneumatic tire 1 is based is provided, the "standardized load" refers to a load that is defined by the standard for each tire, and is "maximum load capacity" in the JATMA standard, the maximum value recited in the table "TIRE LOAD LIMITS AT VARIOUS COLD INFLATION PRESSURES" in the TRA standard, or "LOAD CAPACITY" in the ETRTO standard. In a case where a standard system including a standard on which the pneumatic tire 1 is based is not provided, the "standardized load" refers to a load defined for each tire by a manufacturer or the like as the maximum load that can be applied when the pneumatic tire 1 is used.

The protector 8 extends inward from the tread end Te in the tire radial direction, for example. The protector 8 may, for example, have a shape continuously extending from the tread pattern of the ground contact surface 2s. The protector 8 is not limited to such a structure. The protector 8 may be provided at any position of the sidewall portion 3 as long as at least a part of the protector 8 is provided on the buttress portion 3a.

The ratio DH/SH of a height DH of the protector 8 in the tire radial direction to the cross-sectional height SH is 30% to 50%. Since the ratio DH/SH is 30% or more, contact between a curbstone and the sidewall portion 3 can be reliably reduced even during application of a load, resulting in improvement in cut resistance of the pneumatic tire 1. Since the ratio DH/SH is 50% or less, excessive increase in side stiffness can be inhibited, so that the pneumatic tire 1 can achieve both cut resistance and ride comfort.

The product (DH/SH)×PH×Hs of the ratio DH/SH, the protrusion height PH (mm) of the protector 8, and a hardness Hs of the tread rubber 2G is 34 to 201. Here, the hardness Hs of the tread rubber 2G is a durometer hardness as measured by using a type A durometer in accordance with JIS-K6253 in an environment of 23°C.

The pneumatic tire 1 having such a structure is designed so as to reduce the hardness Hs of the tread rubber 2G in a case where the height DH and the protrusion height PH of the protector 8 are large and side stiffness tends to be high, so that the pneumatic tire 1 can achieve both cut resistance and ride comfort.

The outer diameter SD of the pneumatic tire 1 is preferably 350 to 600 mm. Since the outer diameter SD of the pneumatic tire 1 is 350 mm or more, a space can be ensured inside the rim. Since the outer diameter SD of the pneumatic tire 1 is 600 mm or less, a contribution to increase in space in a vehicle such as a small bus or a low-floor electric vehicle is made.

The cross-sectional width SW of the pneumatic tire 1 is preferably 145 to 285 mm. Since the cross-sectional width SW is 145 mm or more, a large volume of the tire inner cavity can be ensured, whereby a contribution to improvement in ride comfort is made by the pneumatic tire 1. Since the cross-sectional width SW is 285 mm or less, excessive increase in tire weight is inhibited, whereby the pneumatic tire 1 can maintain high ride comfort.

The rim width RW of the rim R is preferably 9 inches or less. In the pneumatic tire 1 having such a structure, excessive increase in rim weight can be inhibited, contributing to maintaining high ride comfort.

In the present embodiment, the carcass 6 includes at least two carcass plies 6A and 6B. The carcass 6 having such a structure can allow exhibition of strength suitable for bearing a heavy load of a small bus, a low-floor electric vehicle, or the like.

The at least two carcass plies 6A and 6B include, in the tread portion 2, a first carcass ply 6A located on an inner side in the tire radial direction, and a second carcass ply 6B located outward of the first carcass ply 6A in the tire radial direction, for example.

At least one of the carcass plies 6A and 6B preferably includes a body portion 6a extending from the tread portion 2 to the bead cores 5 of the pair of bead portions 4 through the pair of sidewall portions 3, and a pair of turned-up portions 6b continuous to the body portion 6a. Each of the pair of turned-up portions 6b is, for example, a portion turned up around a corresponding one of the pair of the bead cores 5 from the inner side to the outer side in the tire axial direction.

In the present embodiment, the first carcass ply 6A and the second carcass ply 6B each include the body portion 6a and the turned-up portions 6b. The first carcass ply 6A and the second carcass ply 6B having such a structure improve side strength by the respective turned-up portions 6b, and are thus suitable for bearing a heavy load of a small bus, a low-floor electric vehicle, or the like.

An outer end 6e, in the tire radial direction, of each of the pair of turned-up portions 6b of the first carcass ply 6A is, for example, located tire-radially outward of an outer end 6e, in the tire radial direction, of the corresponding one of the pair of turned-up portions 6b of the second carcass ply 6B. The carcass plies 6A and 6B having such a structure allow stress at the respective outer ends 6e to be dispersed, thereby reducing damage originating from the outer ends 6e.

In the present embodiment, the outer end 6e of the turned-up portion 6b of the first carcass ply 6A is located outward of the tire maximum width position P in the tire radial direction, and the outer end 6e of the turned-up portion 6b of the second carcass ply 6B is located inward of the tire maximum width position P in the tire radial direction. The carcass 6 having such a structure can allow achievement of both stiffness and weight reduction of the sidewall portions 3, whereby a contribution to improvement in ride comfort is made by the pneumatic tire 1 as a wide, small-diameter tire capable of bearing a heavy load.

The carcass plies 6A and 6B include carcass cords (not illustrated) formed of organic fiber cords, for example. Examples of the organic fiber cord include a cord formed of a single kind of fiber selected from the group consisting of polyethylene terephthalate fiber, polyethylene naphthalate fiber, nylon fiber, aramid fiber, and rayon fiber, and a hybrid fiber cord formed of two or more kinds of fibers selected therefrom.

The carcass cords are preferably arranged at an angle of 25 to 90° with respect to the tire circumferential direction. Here, the angle of the carcass cords is an angle thereof in the pneumatic tire 1 in the standardized state, and can be, for example, checked by partially peeling the tread portion 2.

In a case where the carcass cords are inclined at an angle of less than 90° with respect to the tire circumferential direction, the carcass cords of the first carcass ply 6A and the carcass cords of the second carcass ply 6B are preferably inclined in opposite directions with respect to the tire circumferential direction. For the carcass 6, a bias structure may, for example, be employed.

The belt layer 7 includes at least one belt ply and preferably includes two or more belt plies. In the present embodiment, the belt layer 7 includes two belt plies 7A and 7B. The two belt plies 7A and 7B include, for example, a first belt ply 7A located on an inner side in the tire radial direction, and a second belt ply 7B located outward of the first belt ply 7A in the tire radial direction. The belt layer 7 having such a structure can improve stiffness of the tread portion 2, and is suitable for bearing a heavy load.

The belt plies 7A and 7B include belt cords (not illustrated) formed of steel cords, for example. The belt cord may, for example, be a single steel cord, or a strand obtained by stranding a plurality of steel filaments together.

The belt cords are arranged at an angle of 10 to 30° with respect to the tire circumferential direction, for example. The belt cords of the first belt ply 7A and the belt cords of the second belt ply 7B are preferably inclined in opposite directions with respect to the tire circumferential direction.

The belt layer 7 having such a structure can increase stiffness of the tread portion 2 in a well-balanced manner, and can allow the pneumatic tire 1 to achieve both ride comfort and stiffness for bearing a heavy load. Here, the angle of the belt cord is an angle thereof in the pneumatic tire 1 in the standardized state, and can be, for example, checked by partially peeling the tread portion 2.

Although the particularly preferred embodiment of the present invention has been described above in detail, the present invention is not limited to the above-described embodiment, and various modifications can be made to implement the present invention within the scope of the appended claims.

### Examples

Pneumatic tires having the basic structure illustrated in FIG. 1 were produced as test tires based on the specifications indicated in Table 1. The pneumatic tires produced as the test tires were evaluated in terms of cut resistance and ride comfort. Main common specifications and test methods are as described below.

### <Common specifications>

Tire size: 205/40R15
Rim size: 15×7.0J
Air pressure: 350 kPa
Test vehicle: small bus

### <Cut resistance>

A test vehicle on which the pneumatic tire produced as the test tire was mounted was caused to run at a certain angle with respect to a curbstone. Damage to the pneumatic tire and a wheel was visually evaluated after a side surface of the pneumatic tire was brought into contact with the curbstone 10 times. The result was represented by an index with the index of the comparative example being 100. The greater the value was, the better the cut resistance was.

### <Ride comfort>

A test driver sat in a test vehicle on which the pneumatic tire produced as the test tire was mounted, and drove the test vehicle on a paved road surface in a test course. At this time, sensory evaluation was made by the test driver for ride comfort. The result was represented by an index with the index of the comparative example being 100. The greater the value was, the better the ride comfort was. It is confirmed that, when the index is 80 or more in the evaluation for ride comfort, the ride comfort is evaluated as being generally good on the market.

The test results are indicated in Table 1.

**[Table 1]**

| | Comp. Ex. | Ex. 1 | Ex. 2 | Ex. 3 | Ex. 4 | Ex. 5 |
|---|---|---|---|---|---|---|
| Ratio DH/SH (%) of height DH of protector to cross-sectional height SH | 0 | 40 | 40 | 30 | 50 | 50 |
| Protrusion height PH (mm) of protector 8 | 0 | 2 | 6 | 2 | 6 | 6 |
| Hardness Hs of tread rubber | 64 | 64 | 64 | 57 | 57 | 67 |
| Product (DH/SH)×PH×Hs | 0 | 51.2 | 153.6 | 34.2 | 171 | 201 |
| Cut resistance (index) | 100 | 110 | 125 | 105 | 130 | 130 |
| Ride comfort (index) | 100 | 95 | 90 | 105 | 95 | 85 |
| Overall performance (index) | 200 | 205 | 215 | 210 | 225 | 215 |

According to the test results, it was confirmed that the pneumatic tires of the examples had improved cut resistance as compared with the comparative example. It was also confirmed that the pneumatic tires of the examples were sufficiently marketable in terms of ride comfort. Furthermore, the pneumatic tires of the examples were also excellent in overall performance that was evaluated based on the total of cut resistance and ride comfort as compared with the comparative example. Therefore, it was confirmed that the pneumatic tires of the examples achieved both cut resistance and ride comfort.

## Claims

1. A pneumatic tire (1) to be mounted and used on a rim (R) having a rim diameter RD of 10 to 18 inches and a rim width RW, the pneumatic tire (1) comprising:
a tread portion (2) having a ground contact surface (2s), wherein the tread portion (2) includes tread rubber (2G) forming the ground contact surface (2s); and
a pair of sidewall portions (3) extending inward in a tire radial direction from both sides of the tread portion (2) in a tire axial direction, wherein
the tire (1) has a cross-sectional width SW obeying the relation that a ratio RW/SW of the rim width RW to the cross-sectional width SW is 78% to 99%,
each of the pair of sidewall portions (3) has a buttress portion (3a) located on an outer side in the tire radial direction, and
a protector (8) protruding outward in the tire axial direction is disposed on at least one of a pair of the buttress portions (3a),
**characterized in that**
a ratio SH/SW of a cross-sectional height SH of the tire (1) to the cross-sectional width SW is 30% to 45%,
a ratio DH/SH of a height DH of the protector (8) in the tire radial direction to the cross-sectional height SH is 30% to 50%, and
a product (DH/SH)×PH×Hs of the ratio DH/SH, a protrusion height PH [mm] of the protector (8), and a hardness Hs of the tread rubber (2G) is 34 to 201, wherein the hardness Hs of the tread rubber (2G) is a durometer hardness as measured by using a type A durometer in accordance with JIS-K6253 in an environment of 23°C.

2. The pneumatic tire (1) according to claim 1, wherein the protector (8) has an outer end (8e) located outward, in the tire axial direction, of a tire maximum width position (P) on each of the sidewall portions (3) excluding the protector (8).

3. The pneumatic tire (1) according to claim 2, wherein the protector (8) is provided on each of the pair of the buttress portions (3a).

4. The pneumatic tire (1) according to claim 3, wherein a total width PW of the tire (1) between a pair of the outer ends (8e) is 105% to 115% of the cross-sectional width SW.

5. The pneumatic tire (1) according to any one of claims 1 to 4, wherein the protector (8) has the protrusion height PH of 2.0 to 6.0 mm.

6. The pneumatic tire (1) according to any one of claims 1 to 5, wherein
the pneumatic tire (1) includes a carcass (6) extending from the tread portion (2) to a bead portion (4) located inward of each of the pair of sidewall portions (3) in the tire radial direction, and
the carcass (6) includes at least two carcass plies (6A, 6B).

7. The pneumatic tire (1) according to claim 6, wherein
the at least two carcass plies (6A, 6B) include, in the tread portion (2), a first carcass ply (6A) located on an inner side in the tire radial direction, and a second carcass ply (6B) located outward of the first carcass ply (6A) in the tire radial direction, and
each of the first carcass ply (6A) and the second carcass ply (6B) includes a body portion (6a) extending from the tread portion (2) to bead cores (5) of a pair of the bead portions (4) through the pair of sidewall portions (3), and a pair of turned-up portions (6b) continuous to the body portion (6a), the turned-up portions (6b) being turned up around a pair of the bead cores (5), respectively, from an inner side to an outer side in the tire axial direction.

8. The pneumatic tire (1) according to claim 7, wherein an outer end (6e), in the tire radial direction, of each of the pair of turned-up portions (6b) of the first carcass ply (6A) is located outward of an outer end (6e), in the tire radial direction, of the corresponding one of the pair of turned-up portions (6b) of the second carcass ply (6B), in the tire radial direction.

## Patentansprüche

1. Luftreifen (1) zur Montage und Verwendung auf einer Felge (R) mit einem Felgendurchmesser RD von 10 bis 18 Zoll und einer Felgenbreite RW, wobei der Luftreifen (1) umfasst:
einen Laufflächenabschnitt (2), der eine Bodenkontaktfläche (2s) aufweist, wobei der Laufflächenabschnitt (2) Laufflächengummi (2G) umfasst, der die Bodenkontaktfläche (2s) bildet; und
ein Paar Seitenwandabschnitte (3), die sich in einer Reifenradialrichtung von beiden Seiten des Laufflächenabschnitts (2) in einer Reifenaxialrichtung nach innen erstrecken, wobei
der Reifen (1) eine Querschnittsbreite SW aufweist, die der Beziehung folgt, dass ein Verhältnis RW/SW der Felgenbreite RW zur Querschnittsbreite SW 78 % bis 99 % beträgt,
jeder des Paars Seitenwandabschnitte (3) einen Stützabschnitt (3a) aufweist, der sich auf einer Außenseite in der Reifenradialrichtung befindet, und
ein Protektor (8), der in der Reifenaxialrichtung nach außen vorsteht, auf mindestens einem eines Paars der Stützabschnitte (3a) angeordnet ist,
**dadurch gekennzeichnet, dass** ein Verhältnis SH/SW einer Querschnittshöhe SH des Reifens (1) zur Querschnittsbreite SW 30 % bis 45 % beträgt,
ein Verhältnis DH/SH einer Höhe DH des Protektors (8) in der Reifenradialrichtung zur Querschnittshöhe SH 30 % bis 50 % beträgt, und
ein Produkt (DH/SH) x PH x Hs des Verhältnisses DH/SH, einer Vorsprungshöhe PH [mm] des Protektors (8) und einer Härte Hs des Laufflächengummis (2G) 34 bis 201 beträgt, wobei die Härte Hs des Laufflächengummis (2G) eine Durometerhärte ist, wie unter Verwendung eines Durometers vom Typ A gemäß JIS-K6253 in einer Umgebung von 23 °C gemessen.

2. Luftreifen (1) nach Anspruch 1, wobei der Protektor (8) ein äußeres Ende (8e) aufweist, das sich in der Reifenaxialrichtung außerhalb einer Reifenmaximalbreitenposition (P) auf jedem der Seitenwandabschnitte (3) mit Ausnahme des Protektors (8) befindet.

3. Luftreifen (1) nach Anspruch 2, wobei der Protektor (8) auf jedem des Paars der Stützabschnitte (3a) vorgesehen ist.

4. Luftreifen (1) nach Anspruch 3, wobei eine Gesamtbreite PW des Reifens (1) zwischen einem Paar der äußeren Enden (8e) 105 % bis 115 % der Querschnittsbreite SW beträgt.

5. Luftreifen (1) nach einem der Ansprüche 1 bis 4, wobei der Protektor (8) die Vorsprungshöhe PH von 2,0 bis 6,0 mm aufweist.

6. Luftreifen (1) nach einem der Ansprüche 1 bis 5, wobei
der Luftreifen (1) eine Karkasse (6) umfasst, die sich vom Laufflächenabschnitt (2) zu einem Wulstabschnitt (4) erstreckt, der sich in der Reifenradialrichtung innen von jedem des Paars Seitenwandabschnitte (3) befindet, und
die Karkasse (6) mindestens zwei Karkasslagen (6A, 6B) umfasst.

7. Luftreifen (1) nach Anspruch 6, wobei
die mindestens zwei Karkasslagen (6A, 6B) im Laufflächenabschnitt (2) eine erste Karkasslage (6A), die sich auf einer Innenseite in der Reifenradialrichtung befindet, und eine zweite Karkasslage (6B), die sich in der Reifenradialrichtung außen von der ersten Karkasslage (6A) befindet, umfassen, und
jede der ersten Karkasslage (6A) und der zweiten Karkasslage (6B) einen Körperabschnitt (6a), der sich vom Laufflächenabschnitt (2) zu Wulstkernen (5) eines Paars der Wulstabschnitte (4) durch das Paar Seitenwandabschnitte (3) erstreckt, und ein Paar Umschlagabschnitte (6b), die sich an den Körperabschnitt (6a) anschließen, umfasst, wobei die Umschlagabschnitte (6b) jeweils von einer Innenseite zu einer Außenseite in der Reifenaxialrichtung um ein Paar der Wulstkerne (5) umgeschlagen sind.

8. Luftreifen (1) nach Anspruch 7, wobei sich ein äußeres Ende (6e) in der Reifenradialrichtung jedes des Paars Umschlagabschnitte (6b) der ersten Karkasslage (6A) in der Reifenradialrichtung außerhalb eines äußeren Endes (6e) des entsprechenden des Paars Umschlagabschnitte (6b) der zweiten Karkasslage (6B) in der Reifenradialrichtung befindet.

## Revendications

1. Pneumatique (1) destiné à être monté et utilisé sur une jante (R) présentant un diamètre de jante RD de 10 à 18 pouces et une largeur de jante RW, le pneumatique (1) comprenant:
une portion de bande de roulement (2) présentant une surface de contact au sol (2s), dans lequel la portion de bande de roulement (2) comprend une gomme de bande de roulement (2G) formant la surface de contact au sol (2s); et
une paire de portions de flanc (3) s'étendant vers l'intérieur dans une direction radiale du pneu depuis les deux côtés de la portion de bande de roulement (2) dans une direction axiale du pneu, dans lequel
le pneu (1) présente une largeur de section SW suivant la relation selon laquelle un rapport RW/SW de la largeur de jante RW à la largeur de section SW est de 78 % à 99 %,
chacune de la paire de portions de flanc (3) présente une portion de contrefort (3a) située sur un côté extérieur dans la direction radiale du pneu, et
un protecteur (8) faisant saillie vers l'extérieur dans la direction axiale du pneu est disposé sur au moins l'une d'une paire des portions de contrefort (3a),
**caractérisé en ce que**
un rapport SH/SW d'une hauteur de section SH du pneu (1) à la largeur de section SW est de 30 % à 45 %,
un rapport DH/SH d'une hauteur DH du protecteur (8) dans la direction radiale du pneu à la hauteur de section SH est de 30 % à 50 %, et
un produit (DH/SH)×PH×Hs du rapport DH/SH, d'une hauteur de saillie PH [mm] du protecteur (8) et d'une dureté Hs de la gomme de bande de roulement (2G) est de 34 à 201, dans lequel la dureté Hs de la gomme de bande de roulement (2G) est une dureté au duromètre telle que mesurée en utilisant un duromètre de type A conformément à JIS-K6253 dans un environnement de 23 °C.

2. Pneumatique (1) selon la revendication 1, dans lequel le protecteur (8) présente une extrémité extérieure (8e) située vers l'extérieur, dans la direction axiale du pneu, d'une position de largeur maximale du pneu (P) sur chacune des portions de flanc (3) à l'exclusion du protecteur (8).

3. Pneumatique (1) selon la revendication 2, dans lequel le protecteur (8) est prévu sur chacune de la paire des portions de contrefort (3a).

4. Pneumatique (1) selon la revendication 3, dans lequel une largeur totale PW du pneu (1) entre une paire des extrémités extérieures (8e) est de 105 % à 115 % de la largeur de section SW.

5. Pneumatique (1) selon l'une quelconque des revendications 1 à 4, dans lequel le protecteur (8) présente la hauteur de saillie PH de 2,0 à 6,0 mm.

6. Pneumatique (1) selon l'une quelconque des revendications 1 à 5, dans lequel
le pneumatique (1) comprend une carcasse (6) s'étendant de la portion de bande de roulement (2) à une portion de talon (4) située vers l'intérieur de chacune de la paire de portions de flanc (3) dans la direction radiale du pneu, et
la carcasse (6) comprend au moins deux nappes de carcasse (6A, 6B).

7. Pneumatique (1) selon la revendication 6, dans lequel
les au moins deux nappes de carcasse (6A, 6B) comprennent, dans la portion de bande de roulement (2), une première nappe de carcasse (6A) située sur un côté intérieur dans la direction radiale du pneu, et une deuxième nappe de carcasse (6B) située vers l'extérieur de la première nappe de carcasse (6A) dans la direction radiale du pneu, et
chacune de la première nappe de carcasse (6A) et de la deuxième nappe de carcasse (6B) comprend une portion de corps (6a) s'étendant de la portion de bande de roulement (2) à des tringles (5) d'une paire des portions de talon (4) à travers la paire de portions de flanc (3), et une paire de portions de retournement (6b) se raccordant à la portion de corps (6a), les portions de retournement (6b) étant retournées autour d'une paire des tringles (5), respectivement, d'un côté intérieur vers un côté extérieur dans la direction axiale du pneu.

8. Pneumatique (1) selon la revendication 7, dans lequel une extrémité extérieure (6e), dans la direction radiale du pneu, de chacune de la paire de portions de retournement (6b) de la première nappe de carcasse (6A) est située vers l'extérieur d'une extrémité extérieure (6e), dans la direction radiale du pneu, de celle correspondante de la paire de portions de retournement (6b) de la deuxième nappe de carcasse (6B), dans la direction radiale du pneu.
